(19) Europäisches Patentamt
European Patent Office
Office européen des brevets

(11) **EP 2 684 010 B1**

(12) **EUROPÄISCHE PATENTSCHRIFT**

(45) Veröffentlichungstag und Bekanntmachung des Hinweises auf die Patenterteilung:
**19.04.2017   Patentblatt 2017/16**

(21) Anmeldenummer: **12713615.8**

(22) Anmeldetag: **07.03.2012**

(51) Int Cl.:
*G01F 25/00* (2006.01)      *G01F 1/66* (2006.01)

(86) Internationale Anmeldenummer:
**PCT/EP2012/053909**

(87) Internationale Veröffentlichungsnummer:
**WO 2012/120039 (13.09.2012 Gazette 2012/37)**

(54) **VERFAHREN ZUR ULTRASCHALL-CLAMP-ON-DURCHFLUSSMESSUNG UND VORRICHTUNG ZUR UMSETZUNG DES VERFAHRENS**

METHOD OF ULTRASONIC CLAMP-ON FLOW RATE MEASUREMENT AND DEVICE FOR REALISING THE METHOD

PROCÉDÉ DE MESURE DE DÉBIT PAR ULTRASONS ET DISPOSITIF POUR METTRE EN OEUVRE LEDIT PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.03.2011   DE 102011005170**

(43) Veröffentlichungstag der Anmeldung:
**15.01.2014   Patentblatt 2014/03**

(73) Patentinhaber: **Flexim Flexible Industriemesstechnik GmbH 12681 Berlin (DE)**

(72) Erfinder: **FUNCK, Bernhard 19059 Rostock (DE)**

(74) Vertreter: **Garrels, Sabine Schnick & Garrels Schonenfahrerstrasse 7 18057 Rostock (DE)**

(56) Entgegenhaltungen:
| | |
|---|---|
| DE-A1- 10 221 771 | DE-A1-102004 031 274 |
| DE-A1-102008 029 772 | DE-A1-102009 046 871 |
| GB-A- 2 363 455 | |

**Beschreibung**

Clamp-on-Durchflussmessgeräte finden breiten Einsatz in vielen Bereichen der Industrie. Einer ihrer wesentlichen Vorteile besteht darin, dass die Durchflussmessung ohne Kontakt mit dem strömenden Medium stattfindet.

**Stand der Technik**

Die bei der Clamp-on-Durchflussmessung verwendeten Schallwandler bestehen aus dem Schallwandlervorlauf und einem darauf befestigten elektromechanischen Schallwandlerelement, im folgenden kurz als Wandlerelement bezeichnet, das i.a. durch eine Piezokeramik realisiert ist. Die Schallwandler werden von außen auf dem Rohr befestigt, in dem der Durchfluss gemessen werden soll. Das Rohr wird im Folgenden als Messrohr bezeichnet. Die Schallwandler werden so positioniert, dass ein Ultraschallsignal von einem Schallwandler durch das Messrohr zum anderen Schallwandler gesendet werden kann und der Schallstrahl im strömenden Medium gegenüber der Rohrachse einen Winkel kleiner 90° aufweist. Bei Clamp-on-Durchflussmessgeräten nach dem Laufzeitverfahren wird die Differenz der Laufzeiten zweier sich in bzw. gegen die Strömung ausbreitender Schallsignale gemessen und daraus der Volumenstrom berechnet. Der Zusammenhang zwischen den gemessenen Laufzeiten und der Strömungsgeschwindigkeit ist z.B. in WO 8808516 A1 beschrieben. Die mittlere Strömungsgeschwindigkeit Vl auf dem Schallpfad kann aus der Laufzeitdifferenz $\Delta t$ und der Laufzeit tl im Fluid nach folgender Formel berechnet werden:

$$Vl = Ka \, *(\Delta t/2tl) \qquad\qquad Gl.\ (1)$$

Dabei ist Ka die Sensorkonstante, die den Einstrahlwinkel im Fluid bestimmt:

$$Ka = c\_alpha \, / \, sin(alpha) \qquad\qquad Gl.\ (2)$$

Hier sind alpha und c_alpha der Einstrahlwinkel bzw. die Schallgeschwindigkeit im Schallwandlervorlauf. Um den Volumenstrom zu berechnen, muss noch der strömungsmechanische Kalibrierfaktor KF bekannt sein, welcher dass Verhältnis des Flächenmittelwertes der Strömungsgeschwindigkeit zur mittleren Strömungsgeschwindigkeit auf dem Schallpfad darstellt:

$$KF = VA/Vl \qquad\qquad Gl.\ (3)$$

Dann ergibt sich der Volumenstrom Q mit der Querschnittsfläche A des Rohres zu

$$Q = KF*A*Ka*(\Delta t/2tl) \qquad\qquad Gl.\ (4)$$

Eine vorteilhafte Ausgestaltung der Ultraschall-Clamp-on Durchflussmessung ist z.B. in DE19808642 beschrieben. Durch die Gestaltung des Rohrquerschnittes wird der strömungsmechanische Kalibrierfaktor KF so gestaltet, dass dieser unabhängig vom Strömungszustand ist. In der DE10312034B3 ist ein Ultraschalldurchflußmeßverfahren dargestellt, das durch die Erfassung von aufeinanderfolgenden, mehrfach das Messrohr durchlaufenden Ultraschallsignalen eine besonders exakte Bestimmung der Fluidlaufzeit tl ermöglicht.

EP0733885A1 beschreibt ein Verfahren zur Kompensation der Druck- und Temperaturabhängigkeit des Fluids für Ultraschall-Clamp-on Duchflussmessgeräte durch Bestimmung der Fluidschallgeschwindigkeit und die Anpassung des Schallpfades innerhalb des Fluids nach dem Brechungsgesetz. Die Schallgeschwindigkeiten des Schallwandlervorlaufs und der Rohrwand mit ihren Temperaturabhängigkeiten werden dabei als bekannt vorausgesetzt.

In DE102009046871A1 ist ein Verfahren zur Kalibrierung des Messumformers eines Ultraschall-Clamp-on-Durchflußmeßgerätes beschrieben. Damit ist eine von den akustischen Eigenschaften des Messrohres und der Schallwandler unabhängige Kalibrierung der nach Gl. 1 erforderlichen Zeitmessung möglich. Die Sensorkonstante ka wird bei diesen Verfahren als bekannt und unveränderlich vorausgesetzt.

Prinzipiell wird angenommen, dass sich der Einstrahlwinkel im Fluid über das Brechungsgesetz aus der Sensorkonstante Ka und der Schallgeschwindigkeit im Fluid ergibt. Die Rohrwand des Messrohres kann jedoch eine nicht vernachlässigbare Abweichung von der Schallausbreitung nach dem Brechungsgesetz bewirken. Messungen haben ergeben, dass dann die in Gl. (1) verwendete Sensorkonstante Ka nicht exakt den Zusammenhang zwischen der Strömungsgeschwindigkeit VI und der Laufzeitdifferenz Δt sowie der Laufzeit tl wiederspiegelt. Statt der nach Gl. (2) aus den Parametern des Schallwandlers berechneten Sensorkonstante Ka müsste in Gl. (1) also ein Faktor verwendet werden, der außerdem den Einfluss der Rohrwand enthält. Dieser Faktor könnte allgemein als akustischer Kalibrierfaktor bezeichnet werden. Im Idealfall, dass kein Einfluss der Rohrwand vorliegt, wäre er mit Ka identisch, i.a. weicht er jedoch mehr oder weniger stark von Ka ab. Da die Rohrwand nicht die Schallgeschwindigkeit im Schallwandlervorlauf beeinflusst, kann diese Abweichung nur als eine Änderung des Einstrahlwinkels alpha gedeutet werden.

Ein wesentlicher Vorteil der Clamp-on-Durchflussmessung besteht darin, dass die Schallwandler auf ein an der Messstelle vorhandenes Rohr installiert werden können. Wenn dieser Vorteil genutzt werden soll, kann das Durchflussmessgerät also nicht im Werk zusammen mit dem Messrohr kalibriert werden. Eine eventuelle Beeinflussung des akustischen Kalibrierfaktors durch das Messrohr muss also nach der Installation der Schallwandler auf dem Messrohr an der Messstelle kompensiert werden. Dazu ist es erforderlich, diesen Einfluss zu quantifizieren, also den besagten akustischen Kalibrierfaktor zu ermitteln. Die Ermittlung eines Kalibrierfaktors für ein Messgerät, das sich bereits an der Messstelle befindet, wird auch als Feldkalibrierung bezeichnet. Dabei wird die Anzeige des Messgerätes mit der Anzeige eines Referenzmessgerätes verglichen. Meist ist allerdings kein Referenzmessgerät an der Messstelle vorhanden. Es ist also wünschenswert, den akustischen Kalibrierfaktor ohne die Benutzung eines Referenzmessgerätes zu ermitteln.

Das in DE 102004031274 B4 beschriebene Verfahren ist prinzipiell dafür geeignet. Die Anwendung dieses Verfahrens ist aber wegen der dafür erforderlichen gegenseitigen Translation der Schallwandler mit einem erheblichen Aufwand verbunden, wenn das Verfahren an der Messstelle und nicht im Kalibrierlabor angewendet wird.

DE 10221771 A1 zeigt einen Schallwandler für ein Ultraschalldurchflussmessgerät mit mehreren Piezoelementen, welche zu einem Piezo-Array zusammengefasst sind. Allgemein ist ein Array die Anordnung einer Vielzahl unabhängig voneinander ansteuerbarerer Wandlerelemente in einer Ebene, die zusammen in ihrer Zusammenschaltung wiederum ein Wandlerelement ergeben. Die Wandlerelemente, aus denen das Array besteht, werden als Array-Elemente bezeichnet. Bei einem Piezo-Array sind die Array-Elemente Piezoelemente. Dadurch ist es möglich, mit einem flach auf die Messrohrwand angebrachten Schallwandler, unterschiedliche Winkel des in das Messmedium eingestrahlten Ultraschallsignals mit einer Wellenfront zur Messrohrachse zu erreichen. Das zeitversetzte Ansteuern ist jedoch sehr rechenaufwendig. Auch die Veränderung des Winkels ist nur in einem eingeschränkten Bereich sinnvoll. Wird das Ultraschallsignal sehr flach eingestrahlt, kann es zur Anregung von Longitudinalwellen kommen und die Transmission durch die Rohrwand verringert sich und ein wesentlicher Anteil der Schallwelle wird reflektiert.

DE 102008029772 A1 offenbart ein Messsystem und ein Verfahren zur Bestimmung und/oder Überwachung des Durchflusses eines Messmediums durch ein Messrohr mit einem ersten Schallwandler und zumindest einem zweiten Schallwandler. Der zweite Schallwandler weist mindestens zwei Wandlerelemente auf. Die in einer Diagnosephase gewonnenen Signale werden dazu verwendet, die in der Messphase zu verwendenden Wandlerelemente des zweiten Schallwandlers auszuwählen. Damit kann z.B. der Effekt einer sich nach der Installation ändernden Schallgeschwindigkeit abgemindert werden. Eine Feldkalibrierung ist mit dem Verfahren nicht möglich.

DE 102008029772 A1 betrifft ein Verfahren zur Kalibrierung des Messumformers eines Ultraschall-Clamp-on-Durchflußmeßgerätes, bei dem die Messsignale durch eine künstliche Nachbildung des Messpfades erzeugt werden. In diesem Verfahren ist die vorherige Kenntnis des akustischen Kalibrierfaktors notwendig. Der akustischen Kalibrierfaktor wird vom Messumformer verwendet aber nicht von ihm beeinflusst.

## Darstellung der Erfindung

Der Erfindung liegt die Aufgabe zugrunde, ein Verfahren zur Clamp-on-Durchflussmessung und eine Vorrichtung zur Durchführung des Verfahrens zu schaffen, das die durch das Messrohr verursachte Abweichung des akustischen Kalibrierfaktors kompensiert, das ohne die Verwendung eines Referenzmessgerätes auskommt und bei dem die Schallwandler in ihrer Installationsposition auf dem Messrohr belassen werden können.

Erfindungsgemäß wird diese Aufgabe durch ein Verfahren zur Ultraschall-Clamp-on-Durchflussmessung mit zwei Schallwandlern mit Wandlerelementen, die auf einem Messrohr installiert sind, wobei mindestens ein Wandlerelement aus mindestens zwei Array-Elementen besteht, gekennzeichnet dadurch, dass in einer Analysephase mit folgenden Schritten

a. Messung einer Laufzeit t1 zwischen einem Wandlerelement 3 des ersten Schallwandlers 1 und einem ersten Array-Element 4a des zweiten Schallwandlers 2,

b. Messung einer Laufzeit t2 zwischen einem Wandlerelement 3 des ersten Schallwandlers 1 und einem zweiten Array-Element 4b des zweiten Schallwandlers 2,

c. Berechnung einer Zeitdifferenz delta_tc zwischen den Laufzeiten t1 und t2,

mit Hilfe der berechneten Zeitdifferenz delta_tc ein akustischer Kalibrierfaktor Kaf ermittelt wird und dieser in der darauffolgenden Betriebsphase zur Messung eines Volumenstroms Q verwendet wird, um den akustischen Einfluss des Messrohres zu kompensieren.

Eine alternative Lösung besteht in einem Verfahren zur Ultraschall-Clamp-on-Durchflussmessung mit zwei Schallwandlern mit Wandlerelementen, die auf einem Messrohr installiert sind, wobei mindestens ein Wandlerelement aus mindestens zwei Array-Elementen besteht, und dadurch gekennzeichnet ist, dass in einer Analysephase eine Kreuzkorrelationsfunktion mindestens zweier Empfangssignale s1 und s2 berechnet wird, wobei Empfangssignal s1 das vom Wandlerelement 3 des ersten Schallwandlers 1 gesendete und vom Array-Element 4a des zweiten Schallwandlers 2 empfangene und digitalisierte Signal ist und Empfangssignal s2 das vom Wandlerelement 3 des ersten Schallwandlers 1 gesendete und vom Array-Element 4b des zweiten Schallwandlers 2 empfangene und digitalisierte Signal ist, die zeitliche Lage des Maximums der Kreuzkorrelationsfunktion ermittelt wird, wobei diese zeitliche Lage die Zeitdifferenz delta_tc ist und mit Hilfe der berechneten Zeitdifferenz delta_tc ein akustischer Kalibrierfaktor Kaf ermittelt wird und dieser in der darauffolgenden Betriebsphase zur Messung eines Volumenstroms Q verwendet wird, um den akustischen Einfluss des Messrohres zu kompensieren.

Es erfolgt eine Berechnung einer Wegdifferenz delta_lc auf Basis der Zeitdifferenz delta_tc, indem eine bekannte Schallgeschwindigkeit ca im Schallwandlervorlauf mit der Zeitdifferenz delta_tc multipliziert wird, daraus sich eine Winkelinderung delta_alpha eines Einstrahlwinkels alpha mit delta_alpha=arcsin(delta_lc / delta_s) ergibt, wobei delta_s der gegenseitige Abstand der Array-Elemente 4a und 4b ist, woraus der Kalibrierfaktor Kaf mit Kaf=Ca/sin(alpha + delta_alpha) berechnet wird.

Der akustische Kalibrierfaktor Kaf wird auf Basis der Zeitdifferenz delta_tc nach der Formel Kaf = Ka / (1 + Kaf * cos(alpha) * delta_tc / delta_s) berechnet, wobei Ka das Verhältnis der Schallgeschwindigkeit ca im Schallwandlervorlauf zum Sinus des Einstrahlwinkels alpha im Schallwandlervorlauf und delta_s der gegenseitige Abstand der Array-Elemente 4a und 4b ist.

Alternativ wird der akustische Kalibrierfaktor Kaf über eine Approximationsfunktion fc(delta_tc) aus der Zeitdifferenz delta_tc berechnet, welche Approximationsfunktion fc(delta_lc) aus einer Anzahl N von Wertepaaren (Kaf_i, delta_tc_i) berechnet wird, welche Wertepaare (Kaf_i, delta_tc_i) vor der Messung gewonnen werden, indem an einer Anzahl N von Rohren i. auf denen die Schallwandler in der für die Ultraschall-Clamp-on-Durchflussessung üblichen Weise installiert sind, jeweils der akustische Kalibrierfaktor Kaf_i und die Zeitdifferenz delta_tc_i gemessen wird, wobei die Messung des akustischen Kalibrierfaktors Kaf_i jeweils erfolgt, indem die Laufzeiten tx1 und tx2 gemessen werden, während der Schallwandler 2 sich an einer Position x1 oder einer Position x2 befindet, welche Laufzeiten jeweils die Laufzeiten zwischen einem Wandlerelement 3 des ersten Schallwandlers 1 und einem Wandlerelement 4 des zweiten Schallwandlers 2 sind, wobei die Positionen x1 und x2 symmetrisch um eine Position x0 liegen und der akustische Kalibrierfaktor Kaf_i zu Kaf_i =(x2 - x1) / (tx2 - tx1) berechnet wird und die Messung der Zeitdifferenz delta_tc_i nach den Schritten a bis c nach Anspruch 1 erfolgt, währen sich der Schallwandler 2 an der Position x0 befindet.

Das Verfahren lässt sich in einem Clamp-on-Durchflussmessgerät implementieren.

Die Vorrichtung zur Umsetzung des Verfahrens besteht aus einer Sendeeinheit , mindestens einem Array-Multiplexer mit mindestens 2 Eingängen, einem Richtungsumschalter, einem Empfangsverstärker, einer Auswerteeinheit und einer Steuereinheit und Berechnungseinheit und ist dadurch gekennzeichnet, dass der Array-Multiplexer entweder ein Array-Element 4a oder ein Array-Element 4b oder beide Array-Elemente mit einem Empfangsverstärker verbindet und die Steuereinheit sowohl den Richtungsumschalter als auch den Array-Multiplexer sowie die Auswerteeinheit, welche eine Zeitdifferenz delta_tc bestimmt, und die Berechnungseinheit, welche aus der Zeitdifferenz delta_tc den akustischen Kalibrierfaktor Kaf ermittelt, um den akustischen Einfluss des Messrohrs zu kompensieren, und in einer Betriebsphase verwendet, kontrolliert.

Die Zeitdifferenz delta_tc wird ermittelt, indem eine Laufzeit t1 zwischen einem Wandlerelement 3 des ersten Schallwandlers 1 und einem ersten Array-Element 4a des zweiten Schallwandlers 2 gemessen wird und eine Laufzeit t2 zwischen einem Wandlerelement 3 des ersten Schallwandlers 1 und einem zweiten Array-Element 4b des zweiten Schallwandlers 2 gemessen wird und zwischen den Laufzeiten t1 und t2 die Zeitdifferenz delta_tc berechnet wird, oder

indem in einer Analysephase eine Kreuzkorrelationsfunktion mindestens zweier Empfangssignale s1 und s2 berechnet wird, wobei das Empfangssignal s1 das vom Wandlerelement 3 des ersten Schallwandlers 1 gesendete und vom ersten Array-Element 4a des zweiten Schallwandlers 2 empfangene und digitalisierte Signal ist und das Empfangssignal s2 das vom Wandlerelement 3 des ersten Schallwandlers 1 gesendete und vom zweiten Array-Element 4b des zweiten Schallwandlers 2 empfangene und digitalisierte Signal ist, und die zeitliche Lage des Maximums der Kreuzkorrelationsfunktion ermittelt wird, wobei diese zeitliche Lage die Zeitdifferenz delta_tc ist.

Die Auswerteeinheit besteht aus einem Analog-Digital-Umsetzer, einem Pufferspeicher und einem digitalen Korrelator. Der Korrelator wird in einer Ausführungsform durch einen programmierbaren Digitalen Signalprozessor realisiert.

Alternativ besteht die Auswerteeinheit aus einer Zeitmessvorrichtung, einen Pufferspeicher und einem Differenzbilder.

Vorteil des Verfahrens und der Vorrichtung zur Durchführung des Verfahrens ist es, dass das Durchflussmessgerät ohne einen Referenzvolumenstrom kalibriert werden kann. Die Schallwandler können dabei in ihrer Installationsposition belassen werden.

## Kurze Beschreibung der Abbildungen

Nachfolgend werden die Ausführungsbeispiele der Erfindung anhand der Zeichnungen näher erläutert. Hierzu zeigen

Fig. 1: Schallwandleranordnung auf dem Messrohr,
Fig. 2: Schallwandleranordnung auf dem Messrohr, wobei das Wandlerelement des Schallwandlers 2 als Array ausgeführt ist,
Fig. 3: Schallwandleranordnung auf dem Messrohr, wobei das Wandlerelement des Schallwandlers 2 als Array ausgeführt ist,
Fig. 4: Schallwandleranordnung auf einem Messrohr,
Fig. 5: Schallwandleranordnung auf dem Messrohr, wobei das Wandlerelement beider Schallwandler als Array ausgeführt ist,
Fig. 6 Schaltungsanordnung zur Umsetzung des Verfahrens,
Fig. 7 Auswerteeinheit,
Fig. 8 weitere Ausführungsform der Auswerteeinheit,
Fig. 9 weitere Ausführungen des Wandlerelements des Schallwandlers als Array mit weiteren Array-Multiplexer.

## Ausführung der Erfindung

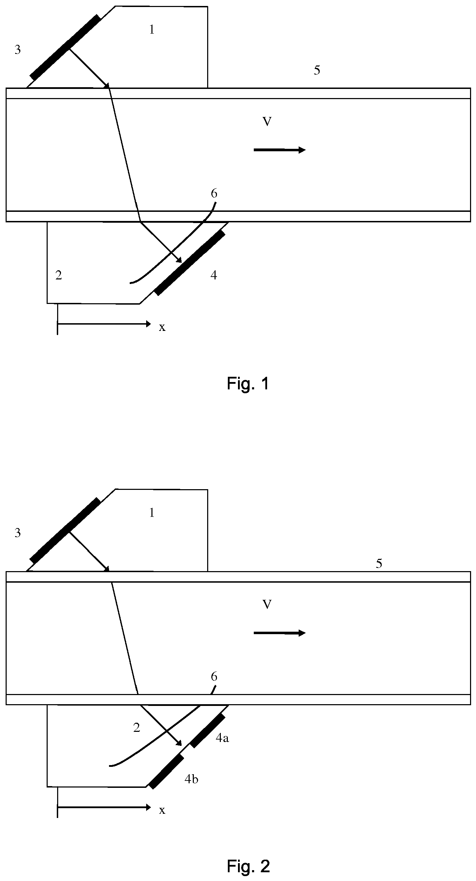

Die Anordnung in Fig. 2 besteht aus den beiden Schallwandlern 1 und 2 mit den Wandlerelementen 3 und 4 sowie dem Messrohr 5. Wenn die Abstrahlfläche der Wandlerelemente ausreichend groß gegenüber der Wellenlänge ist, dann erfolgt die Schallausbreitung annähernd in Form ebener Wellen. In Fig. 1 ist eine solche ebene Wellenfront 6 dargestellt. Für das Messrohr wird angenommen, dass es axialsymmetrisch bezüglich seiner Geometrie und seiner Materialeigenschaften ist. In der in Fig. 1 gezeigten Schnittebene sind die Rohrwandgrenzen also zueinander planparallel. Wenn also eine Welle vom Schallwandler 1 durch das Rohr zum Schallwandler 2 gesendet wird, dann sind die Einstrahlwinkel in beiden Schallwandlervorläufen gleich groß. Das bedeutet, dass eine vom Wandlerelement 3 gesendete Wellenfront parallel zum Wandlerelement 4 eintrifft. Die Filterwirkung der Rohrwand kann nun zu Abweichungen von diesem idealen Verhalten führen. Es kommt zu einer Änderung der Ausbreitungsrichtung der Welle beim Durchgang durch die Rohrwand, die sich dadurch äußert, dass die Wellenfront nicht genau parallel zum Wandlerelement 4, das die eintreffende Schallwelle empfängt, eintrifft.

Die Idee der Erfindung beruht darauf, diese Abweichung von der Parallelität der Wellenfront zum Wandlerelement des die Schallwelle empfangenden Schallwandlers anhand der Laufzeitunterschiede zu messen, die sich entlang der Geometrie des empfangenden Wandlerelements ergeben. Dazu wird vorgeschlagen, das Wandlerelement mindestens eines der beiden Schallwandler als Array aus mindestens zwei Array-Elementen auszuführen.

Fig. 2 zeigt eine solche Anordnung. Sie unterscheidet sich von der in Fig. 1 gezeigten Anordnung dadurch, dass das Wandlerelement des Schallwandlers 2 als Array mit den Array-Elementen 4a und 4b ausgeführt ist. Die Wellenfront 6 ist in diesem Beispiel durch das Messrohr in ihrer Ausbreitungsrichtung so verändert, dass sie nicht parallel zum Wandlerelement des Schallwandlers 2 eintrifft. Die Winkeländerung ist allerdings übertrieben dargestellt, um den Effekt zu illustrieren. Die üblicherweise auftretende Beeinflussung ist so klein, dass sie in Fig. 2 nicht sichtbar wäre. Gemessen werden die Laufzeit t1 zwischen dem Wandlerelement 3 eines ersten Schallwandlers 1 und dem Array-Element 4a eines zweiten Schallwandlers 2 sowie die Laufzeit t2 zwischen dem Wandlerelement 3 des ersten Schallwandlers 1 und dem Array-Element 4b des zweiten Schallwandlers 2. Die Abweichung der Wellenfront von der Parallelität zum empfangenden Wandlerelement äußert sich in einer Zeitdifferenz delta_tc zwischen diesen beiden Laufzeiten:

$$\text{delta\_tc} = \text{t2} - \text{t1} \hspace{5cm} \text{Gl. (5)}$$

In einer Analysephase werden daher zunächst die beiden Laufzeiten t1 und t2 gemessen und die Zeitdifferenz delta_tc berechnet, um einen Messwert der Zeitdifferenz delta_tc zu gewinnen. Der Messwert der Zeitdifferenz wird verwendet, um einen Kalibrierfaktor Kaf zu ermitteln. In der darauffolgenden Betriebsphase erfolgt die Durchflussmessung. Dabei wird der während der Analysephase ermittelte Kalibrierfaktor Kaf verwendet, um den akustischen Einfluss des Messrohres zu kompensieren. Dazu wird die Sensorkonstante Ka in Gl. (4) durch Kaf ersetzt.

Während der Betriebsphase werden die beiden Array-Elemente 4a und 4b des Wandlerelements 4 elektrisch parallel geschaltet. Vorteilhafterweise bilden die beiden Array-Elemente des Wandlerelements 4 zusammen ein Wandlerelement derselben Größe wie das Wandlerelement 3. Die Parallelschaltung bewirkt dann, dass das Wandlerelement 4 in etwa dieselben akustischen Eigenschaften wie das Wandlerelement 3 hat.

Eine vorteilhafte Ausgestaltung der Erfindung ergibt sich, indem die Zeitdifferenz delta_tc direkt aus den Empfangssignalen bestimmt wird ohne vorher die Laufzeiten t1 und t2 zu messen. Dazu wird die Kreuzkorrelationsfunktion der Empfangssignale s1 und s2 berechnet, wobei s1 das vom Wandlerelement 3 des ersten Schallwandlers 1 gesendete und vom Array-Element 4a des zweiten Schallwandlers 2 empfangene und digitalisierte Signal und s2 das vom Wandlerelement 3 des ersten Schallwandlers 1 gesendete und vom Array-Element 4b des zweiten Schallwandlers 2 empfangene und digitalisierte Signal ist. Haben beide Signale s1 und s2 dieselbe Laufzeit, dann liegt das Maximum des Zeitverlaufes der Kreuzkorrelationsfunktion an der Stelle t=0. Eine Differenz der Laufzeiten der beiden Signale zeigt sich in einer Verschiebung des Maximums der Kreuzkorrelationsfunktion um genau diese Differenz. Die Zeitdifferenz delta_tc kann also bestimmt werden, indem das Maximum der Kreuzkorrelationsfunktion der Signale s1 und s2 bestimmt wird.

Eine weitere vorteilhafte Ausgestaltung der Erfindung wird im Folgenden erläutert. Aus der Zeitdifferenz delta_tc wird über die Schallgeschwindigkeit ca im Schallwandlervorlauf die Wegdifferenz delta_lc berechnet.

$$\text{Delta\_lc = ca * delta\_tc} \qquad \text{Gl. (6)}$$

Die Schallgeschwindigkeit ca im Schallwandlervorlauf kann als bekannt vorausgesetzt werden. Die Winkeländerung delta alpha beträgt dann

$$\text{Delta\_alpha = arcsin(delta\_lc / delta\_s)} \qquad \text{Gl. (7)}$$

Hier ist delta_s der Abstand der Array-Elemente wie in Fig. 2 definiert. Der akustische Kalibrierfaktor Kaf der installierten Schallwandler ergibt sich indem in Gl. (2) zum Winkel alpha die Winkeländerung delta alpha addiert wird:

$$\text{Kaf = ca /sin(alpha + delta\_alpha)} \qquad \text{Gl. (8)}$$

Eine weitere mögliche Ausgestaltung der Erfindung ergibt sich dadurch, dass die Formel für die Berechnung des Kalibrierfaktors Kaf auf Basis der Zeitdifferenz delta_tc aus folgenden Überlegungen abgeleitet wird.

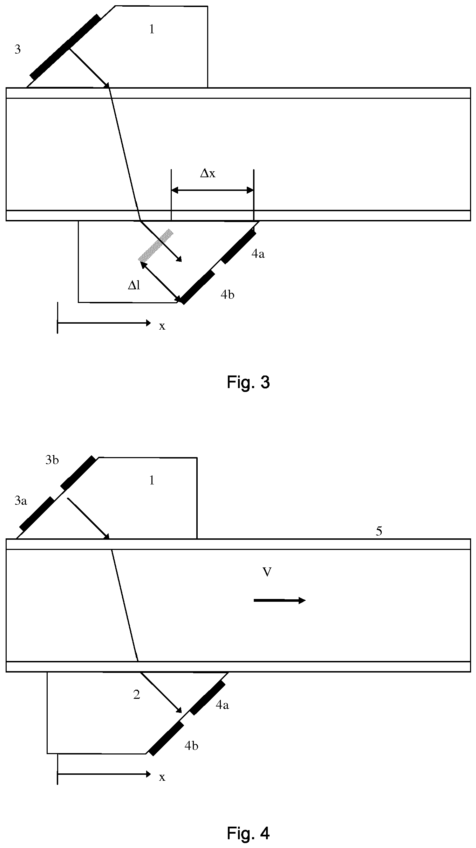

Die in Fig. 3 gezeigte gedachte Verschiebung des Array-Elements 4a um die Länge delta_x führt zu einer Laufzeitänderung der Schallausbreitung zwischen dem Wandlerelement 3 und dem Array-Element 4a um den Betrag delta_tx. Wie in DE 102004031274 B4 gezeigt, ist dann das Verhältnis delta_x zu delta_tx genau der akustische Kalibrierfaktor. Würde dazu der Schallwandler tatsächlich auf dem Rohr verschoben werden, ließe sich so ein akustischer Kalibrierfaktor Kafx bestimmen, der die eventuellen Einflüsse der Rohrwand enthält:

$$\text{Kafx = delta\_x / delta\_tx} \qquad \text{Gl. (9)}$$

Um die physische Verschiebung zu vermeiden, wird stattdessen die Laufzeit t2 gemessen und daraus die Laufzeit t20 zwischen dem Wandlerelement 3 und dem Array-Element 4 an der gedachten Position berechnet. Die Laufzeit t20 ergibt sich aus t2 durch Subtraktion der Laufzeit ta entlang der Strecke delta_l durch den Schallwandlervorlauf.

$$\text{t20 = t2 – ta} \qquad \text{Gl. (10)}$$

Also beträgt die Zeitdifferenz delta_tx mit Gl. (5):

$$\text{delta\_tx = t1 – t20 = t1 – (t2 - ta) = delta\_tc + ta} \qquad \text{Gl. (11)}$$

Damit ergibt sich aus Gl. (9)

$$Kafx = delta\_x / (delta\_tc + ta) \qquad \text{Gl. (12)}$$

Die Laufzeit ta ergibt sich aus der Strecke delta_l und der Schallgeschwindigkeit ca im Schallwandlervorlauf zu

$$ta = delta\_l / ca \qquad \text{Gl. (13)}$$

Dabei bilden delta_l, delta_s und delta_x ein rechtwinkliges Dreieck. Deshalb kann delta_x über den Winkel alpha durch delta_s ersetzt werden. Also gilt:

$$delta\_x = delta\_s / cos(alpha) \qquad \text{Gl. (14)}$$

In Gl. (13) wird delta_l durch das Produkt aus tan(alpha) and delta_s ersetzt:

$$ta = tan (alpha) * delta\_s / ca. \qquad \text{Gl. (15)}$$

Gl. (14) und Gl. (15) eingesetzt in Gl. (12) ergibt:

$$Kafx = delta\_s / (cos(alpha) (delta\_tc + tan (alpha) * delta\_s / ca)) \qquad \text{Gl. (16)}$$

Mit Ka nach Gl. (2) lässt sich Gl. (16) vereinfachen zu

$$Kafx = Ka / (1 + Ka * cos(alpha) * delta\_tc / delta\_s) \qquad \text{Gl. (17)}$$

Die Messung des Kalibrierfaktors Kafx nach Gl. (17) ersetzt also die örtliche Verschiebung delta_x durch eine äquivalente Messung der Zeitdifferenz delta_tc unter Verwendung der Parameter des Schallwandlers. Mit Gl. (17) ist also eine Formel zu Bestimmung des Kalibrierfaktors Kaf gegeben:

$$Kaf = Ka / (1 + Ka * cos(alpha) * delta\_tc / delta\_s) \qquad \text{Gl. (18)}$$

Die Gl. (8) und Gl. (18) sind alternative Möglichkeiten zur Beschreibung des Kalibrierfaktors Kaf. Der Unterschied von Kaf zur Sensorkonstante Ka, die sich aus den reinen Sensoreigenschaften ergibt, entsteht durch den Einfluss der Rohrwand. Ein Spezialfall liegt vor, wenn keinerlei Rohrwandeinflüsse vorhanden sind, sodass delta_tc = 0 ist. Dann ergibt sich aus Gl. (8) und aus Gl. (18) jeweils Kaf = Ka.

Die Gl. (8) führt zum selben Ergebnis wie Gl. (18). Und zwar kann Gl. (8) in Gl. (18) überführt werden, indem der sin(alpha + delta_alpha) durch das erste Glied der Taylorreihe angenähert wird und der arcsin(delta_lc/delta_s) durch das Argument delta_lc/delta_s ersetzt wird.

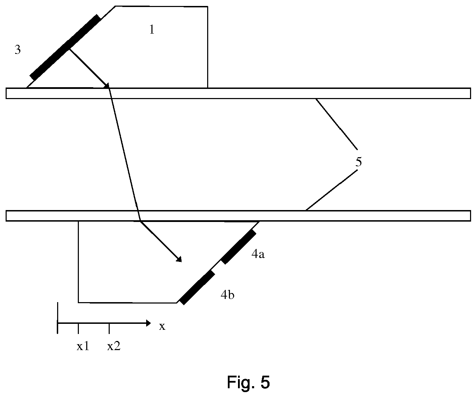

Eine weitere Ausgestaltung der Erfindung ergibt sich dadurch, dass der Zusammenhang zwischen der Zeitdifferenz delta_tc und dem Kalibrierfaktor Kaf experimentell ermittelt wird. Dabei kann Kaf nach dem in DE 102004031274 B4 beschriebenen Verfahren bestimmt werden. Das Verfahren wird auf eine ausreichende Auswahl in der praktischen Anwendung möglicher Messrohre im Labor angewandt. Die Schallwandler werden dazu jeweils wie in Fig. 5 gezeigt auf dem Rohr 5 positioniert. Dann werden die Laufzeiten tx1 und tx2 an den Positionen x1 bzw. x2 des Schallwandlers 2 gemessen, wobei die Positionen x1 und x2 symmetrisch um eine Position x0 liegen. Die Laufzeiten tx1 und tx2 sind dabei jeweils die Laufzeiten zwischen dem Wandlerelement 3 des Schallwandlers 1 und dem Wandlerelement 4 des Schallwandlers 2. Hierbei werden die beiden Array-Elemente 4a und 4b des Wandlerelementes 4 elektrisch parallel geschaltet.

Der Kalibrierfaktor Kaf, der bereits den Einfluss der Rohrwand enthält, ergibt sich wie in DE 102004031274 B4 beschrieben als

$$Kaf = (x2 - x1) / (tx2 - tx1). \qquad \text{Gl. (19)}$$

Anschließend wird der Schallwandler 2 auf Position x0 positioniert und die Zeitdifferenz delta_tc gemessen. Auf diese Weise erhält man für das untersuchte Rohr i ein Wertepaar Kaf_i und delta tc_i. Der Versuch wird für eine Anzahl N von weiteren Rohrsegmenten, die so gewählt werden, dass sie den Kalibrierfaktor unterschiedlich stark beeinflussen, wiederholt. Auf diese Weise erhält man eine Anzahl N von Wertepaaren (Kaf_i, delta_tc_i). Daraus wird nach einem der dafür üblichen Verfahren eine Approximationsfunktion fc(delta_tc) berechnet, die geeignet ist, Kaf aus delta_tc zu approximieren.

Damit kann dann während der Betriebsphase der Kalibrierfaktor Kaf aus dem Messwert delta_tc berechnet werden:

$$Kaf = fc(delta\_tc) \qquad \text{Gl. (20)}$$

Die Funktion fc soll den in der Praxis auftretenden Variationsbereich von Kaf möglichst weitgehend abdecken. Dazu muss der Variationsbereich der Eigenschaften der im Experiment verwendeten Rohre dem der in der praktischen Anwendung des Durchflussmessgerätes vorkommenden Rohre entsprechen. Wenn die Schallwandler z.B. für Rohre aus Stahl und Edelstahl mit Wanddicken zwischen 4 und 8 mm geeignet sind, dann könnten Rohre mit der Wanddicke 4, 6 und 8 mm jeweils aus Stahl und aus Edelstahl untersucht werden. Die Datenbasis könnte erweitert werden, indem jeweils verschiedene Stahl- bzw. Edelstahlsorten mit unterschiedlichen elastischen Eigenschaften untersucht werden.

Eine vorteilhafte Ausgestaltung der Erfindung ergibt sich dadurch, dass das in Fig. 2 gezeigte Wandlerelement 4 nicht aus zwei sondern aus vier Array-Elementen besteht. Dabei können je zwei nicht direkt benachbarte Array-Elemente parallel geschaltet werden. Der Wert delta_x verringert sich auf ein viertel der Gesamtbreite des Arrays. Jedes einzelne der durch diese Verschaltung entstehenden Wandlerelemente hat ¾ der Breite des Arrays sodass dessen Aperturfläche ebenfalls ¾ so groß wie die der für die Durchflussmessung verwendeten Zusammenschaltung aller Array-Elemente des Arrays ist.

Die Anzahl der Array-Elemente kann auf die beschriebene Weise fortgesetzt werden. Dabei wird das in der Analysephase verwendete Wandlerelement mit steigender Anzahl von Array-Elementen der für die Durchflussmessung verwendeten Zusammenschaltung aller Array-Elemente immer ähnlicher. Andererseits verringert sich die Zeitdifferenz delta_tc, die eine bestimmte Winkelabweichung der Wellenfront erzeugt, sodass sie weniger genau messbar wird.

Die beiden in einer Durchflussmessanordnung nach dem Laufzeitverfahren verwendeten Schallwandler sollten in ihren Eigenschaften möglichst ähnlich sein, um den Nullpunktfehler gering zu halten. Eine vorteilhafte Ausgestaltung der Erfindung ergibt sich deshalb, indem in der Betriebsphase die beiden Array-Elemente 4a und 4b parallel geschaltet werden, und dadurch das Wandlerelement des Schallwandlers 2 weitgehend dem des Schallwandlers 1 in der Größe angeglichen wird. Weiterhin ist es möglich, auch das Wandlerelement 3 des Schallwandlers 1 als Array auszuführen. Eine solche Anordnung ist in Fig. 4 gezeigt. Die Array-Elemente 3a und 3b des Wandlerelementes des Schallwandlers 1 werden während der Analysephase und auch während der Betriebsphase parallel geschaltet. Die elektromechanischen Eigenschaften der Wandlerelemente der Schallwandler 1 und 2 sind dann weitgehend identisch.

Mit der in Fig. 4 gezeigten Anordnung können für die Signalübertragung während der Durchflussmessung auch nur die Array-Elemente 3a und 4a oder 3b und 4b genutzt werden. Die für die Kalibrierung erforderlichen Laufzeiten t1 und t2 können zwischen den Array-Elementen 3a und 4a bzw. 3a und 4b oder zwischen 3b und 4a bzw. 3b und 4b gemessen werden.

Weitere mögliche Ausgestaltungen der Erfindung ergeben sich durch die bereits beschriebene Vergrößerung der Anzahl der Array-Elemente.

Die Messung der Zeitdifferenz delta_tc soll nur den Einfluss der Abweichung der Wellenfront von der Parallelität zum Empfangswandlerelement erfassen. Wenn das Medium im Rohr strömt, wird die Schalllaufzeit aber auch von der Strömung beeinflusst. Ist die Strömungsgeschwindigkeit während der Messung von t1 und t2 konstant, dann wirkt sich die Strömung nicht auf die Differenz aus. Praktisch ist das aber nie in idealer Weise gewährleistet. Die Strömung ist praktisch meist in turbulentem Zustand. Dann schwankt die Strömungsgeschwindigkeit zufällig um einen Mittelwert. Der Einfluss derartiger zufälliger Schwankungen bei konstantem Mittelwert der Strömungsgeschwindigkeit kann beseitigt werden, indem mehrere nacheinander gewonnene Messwerte der Zeitdifferenz gemittelt werden. Ist der Mittelwert der Strömungsgeschwindigkeit nicht konstant, dann hilft diese Maßnahme jedoch nicht. Eine zeitlineare Zunahme der Strömungsgeschwindigkeit führt z.B. dazu, dass die Laufzeit t1 systematisch stärker von der Strömungsgeschwindigkeit beeinflusst wird, als die Laufzeit t2. Die Pausenzeiten sollten zwischen den einzelnen Messungen möglichst gering gehalten werden. Diese Maßnahme kann auch in der vorliegenden Erfindung angewendet werden. Die Wirkung der Strömungsänderung ist offenbar umso geringer, je kleiner die zeitlichen Abstände zwischen der Messung von t1 und t2 sind.

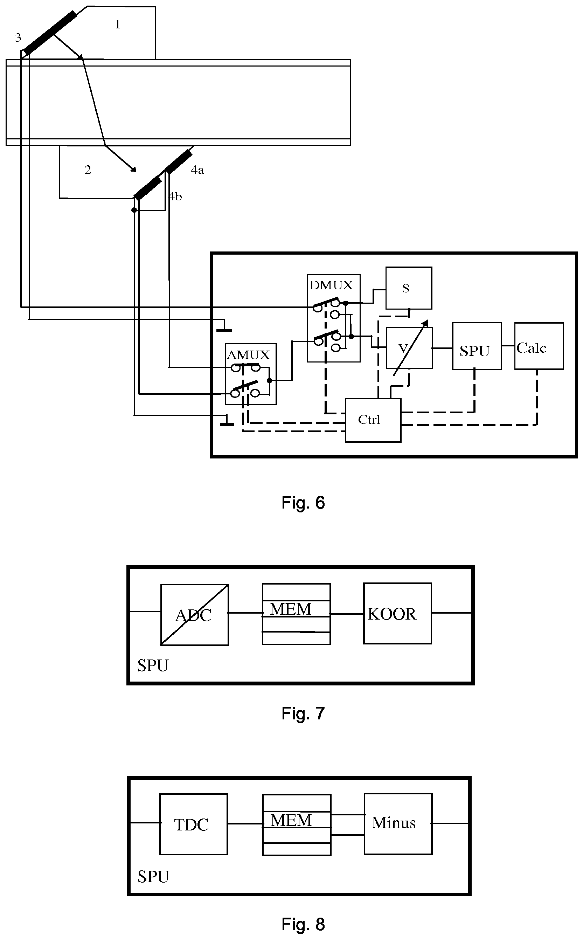

Zur Umsetzung des beschriebenen Verfahrens wird eine Vorrichtung vorgeschlagen die aus einer Sendeeinheit S, mindestens einem Array-Multiplexer AMUX, einem Richtungsumschalter DMUX, einem Empfangsverstärker V, einer Auswerteeinheit SPU und einer Steuereinheit CTRL und einer Berechnungseinheit CALC besteht (Fig. 6). Der Array-Multiplexer AMUX verbindet entweder das Array-Element 4a oder das Array-Element 4b oder beide Array-Elemente mit dem Empfangsverstärker V. Die Steuereinheit CTRL kontrolliert sowohl den Richtungsumschalter DMUX als auch den Array-Multiplexer AMUX sowie die Auswerteeinheit SPU und die Berechnungseinheit CALC.

Während der Analysephase ist der der Richtungsumschalter DMUX so geschaltet, dass die Sendeinheit S mit den Anschlüssen des Schallwandlers 1 und seinem zugehörigen Wandlerelement verbunden ist und der Empfangsverstärker V mit dem Array-Multiplexer AMUX verbunden ist. Der Array-Multiplexer AMUX wird so gesteuert, dass entweder nur das Array-Element 4a oder das Array-Element 4b des Schallwandlers 2 mit dem Empfangsverstärker V verbunden ist.

Die an den Empfangsverstärker V angeschlossene Auswerteeinheit SPU bestimmt die zu ermittelnde Zeitdifferenz delta_tc. Die Auswerteeinheit SPU Fig. 7 besteht aus einem Anlog-Digital-Umsetzer ADC, einem Pufferspeicher MEM und einem Korrelator KORR. Zur Messung von delta_tc wird in einen ersten Schritt das Array-Element 4a über den Array-Multipler AMUX und den Empfangsverstärker V mit der Auswerteeinheit SPU verbunden und ein Sendesignal durch die Sendeeinheit S erzeugt. Das am Array-Element 4a erzeugte Empfangssignal wird in der Auswerteeinheit SPU durch den ADC digitalisiert und im Pufferspeicher abgespeichert. In einem zweiten Schritt wird durch die Steuereinheit CTRL der Array-Multiplexer AMUX so geschaltet, dass das Array-Element 4b mit der Auswerteinheit SPU über den Empfangsverstärker V verbunden ist und ein weiteres Sendesignal durch die Sendeeinheit S erzeugt wird. Das am Array-Element 4b erzeugte Empfangssignal wird in der Auswerteeinheit SPU durch den ADC digitalisiert und ebenfalls im Pufferspeicher abgespeichert. Aus den digitalisierten im Pufferspeicher abgelegten Empfangssignalen der Array-Elemente 4a und 4b wird durch einen digitalen Kreuzkorrelator die Zeitdifferenz delta_tc direkt bestimmt. Dieser digitale Korrelator KORR wird beispielsweise durch einen programmierbaren Digitalen Signalprozessor (DSP) realisiert.

In der Berechnungseinheit CALC wird Kalibrierfaktor Kaf nach Gl. 8 oder Gl. 18 aus der im Korrelator bestimmten Zeitdifferenz delta_tc berechnet.

In einer weiteren Ausführungsform (Fig. 8) besteht die Auswerteeinheit SPU aus einer Zeitmessvorrichtung TDC mit sehr hoher Auflösung, z.B. einem sogenannten "Time to Digital Converter" und einen Pufferspeicher MEM. In dieser Ausführung wird aus dem jeweiligen Empfangssignal ohne Digitalisierung direkt die Laufzeit t1 bzw. t2 gemessen und im Pufferspeicher MEM abgelegt. Nachdem die beiden Laufzeiten t1 und t2 gemessen worden sind, wird ihre Differenz durch den Differenzbilder MINUS errechnet und an die Berechnungseinheit CALC zur Bestimmung des Kalibrierfaktor Kaf weitergeleitet.

In der Betriebsphase wird der Array Multiplexer AMUX durch die Steuereinheit CTRL so geschaltet, dass die Array-Elemente 4a und 4b parallel geschaltet sind. Durch den Richtungsumschalter DMUX wird wechselweise jeweils der Schallwandler 1 als Sender und der Schallwandler 2 als Empfänger und der Schallwandler 2 als Sender und der Schallwandler 1 als Empfänger betrieben. Die Auswerteeinheit SPU wird nun verwendet, um die durch die Strömung hervorgerufene Laufzeitdifferenz $\Delta$t zu messen und die Fluidlaufzeit tfl zu messen, um daraus in der Berechnungseinheit CALC nach Gl. 4 den Durchfluss zu bestimmen, wobei die Sensorkonstante ka durch den in der Analysephase ermittelten Kalibrierfaktor Kaf ersetzt wird.

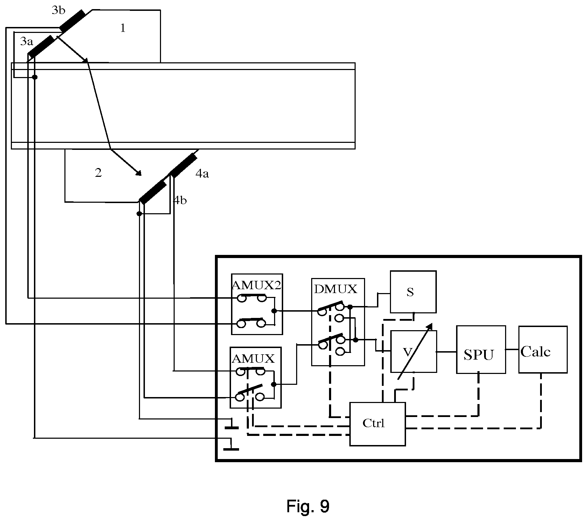

In einer weiteren Ausführung (Fig. 9) wird das Wandlerelement des Schallwandlers 1 ebenfalls als Array ausgeführt und zwischen den Anschlüssen des Schallwandlers 1 und dem Richtungsumschalter DMUX ein weiterer Array-Multiplexer AMUX2 eingefügt. In der Betriebsphase werden die beiden Array-Multiplexer AMUX und AMUX2 so gesteuert, dass sowohl die Array-Elemente 3a und 3b parallel geschaltet sind als auch die Array-Elemente 4a und 4b parallel geschaltet sind. In der Analysephase wird einer der beiden Array-Multiplexer so gesteuert dass die zugehörigen Array-Elemente parallel geschaltet sind, der andere Multiplexer realisiert die aufeinanderfolgende Verbindung der Array-Elemente mit dem Empfangsverstärker V und der Auswerteeinheit SPU.

In einer weiteren Ausführung wird mindestens eines der Wandlerelemente 3 und 4 aus mehr als zwei Array-Elementen aufgebaut. Der zugehörige Array-Multiplexer der Vorrichtungen nach Fig. 6 und Fig. 9 enthält dann so viele Eingänge wie Arrayelemente. In der Analysephase wird der jeweilige Array Multiplexer so gesteuert, dass im ersten Schritt mindestens 2 nicht benachbarte Array-Elemente parallel geschaltet sind und deren Empfangssignal ausgewertet wird. Im zweiten Schritt werden die übrigen und nicht benachbarten Elemente parallel geschaltet und deren Empfangssignal ausgewertet.

## Patentansprüche

1. Verfahren zur Ultraschall-Clamp-on-Durchflussmessung nach einem Laufzeitverfahren mit zwei Schallwandlern mit Wandlerelementen, die auf einem Messrohr installiert sind, wobei mindestens ein Wandlerelement aus mindestens zwei Array-Elementen besteht, **gekennzeichnet dadurch, dass** in einer Analysephase mit folgenden Schritten

a. Messung einer Laufzeit (t1) zwischen einem Wandlerelement (3) des ersten Schallwandlers (1) und einem ersten Array-Element (4a) des zweiten Schallwandlers (2),

b. Messung einer Laufzeit (t2) zwischen einem Wandlerelement (3) des ersten Schallwandlers (1) und einem zweiten Array-Element (4b) des zweiten Schallwandlers (2),

c. Berechnung einer Zeitdifferenz (delta_tc) zwischen den Laufzeiten (t1) und (t2),

mit Hilfe der berechneten Zeitdifferenz (delta_tc) ein akustischer Kalibrierfaktor (Kaf) ermittelt wird und dieser in der darauffolgenden Betriebsphase zur Messung eines Volumenstroms (Q) verwendet wird, um den akustischen Einfluss des Messrohres zu kompensieren.

2. Verfahren zur Ultraschall-Clamp-on-Durchflussmessung nach einem Laufzeitverfahren mit zwei Schallwandlern mit Wandlerelementen, die auf einem Messrohr installiert sind, wobei mindestens ein Wandlerelement aus mindestens zwei Array-Elementen besteht, **gekennzeichnet dadurch, dass** in einer Analysephase eine Kreuzkorrelationsfunktion mindestens zweier Empfangssignale (s1) und (s2) berechnet wird, wobei das Empfangssignal (s1) das vom Wandlerelement (3) des ersten Schallwandlers (1) gesendete und vom ersten Array-Element (4a) des zweiten Schallwandlers (2) empfangene und digitalisierte Signal ist und das Empfangssignal (s2) das vom Wandlerelement (3) des ersten Schallwandlers (1) gesendete und vom zweiten Array-Element (4b) des zweiten Schallwandlers (2) empfangene und digitalisierte Signal ist, die zeitliche Lage des Maximums der Kreuzkorrelationsfunktion ermittelt wird, wobei diese zeitliche Lage eine Zeitdifferenz (delta_tc) ist und mit Hilfe der Zeitdifferenz (delta_tc) ein akustischer Kalibrierfaktor (Kaf) ermittelt wird und dieser in der darauffolgenden Betriebsphase zur Messung eines Volumenstroms (Q) verwendet wird, um den akustischen Einfluss des Messrohres zu kompensieren.

3. Verfahren nach Anspruch 1 oder 2 **dadurch gekennzeichnet, dass** eine Berechnung einer Wegdifferenz (delta_lc) auf Basis der Zeitdifferenz (delta_tc) erfolgt, indem eine bekannte Schallgeschwindigkeit (ca) im Schallwandlervorlauf mit der Zeitdifferenz (delta_tc) multipliziert wird, daraus sich eine Winkeländerung (delta_alpha) eines Einstrahlwinkels (alpha) mit delta_alpha=arcsin(delta_lc / delta_s) ergibt, wobei delta_s der gegenseitige Abstand der Array-Elemente (4a) und (4b) ist, woraus der Kalibrierfaktor (Kaf) mit Kaf=ca/sin(alpha + delta_alpha) berechnet wird.

4. Verfahren nach Anspruch 1 oder 2 **dadurch gekennzeichnet, dass** der akustische Kalibrierfaktor Kaf auf Basis der Zeitdifferenz (delta_tc) nach der Formel

$$Kaf = Ka / (1 + Ka * cos(alpha) * delta\_tc / delta\_s)$$

berechnet wird, wobei (Ka) das Verhältnis der Schallgeschwindigkeit (ca) im Schallwandlervorlauf zum Sinus des Einstrahlwinkels (alpha) im Schallwandlervorlauf und delta_s der gegenseitige Abstand der Array-Elemente (4a) und (4b) ist.

5. Verfahren nach Anspruch 1 oder 2 **dadurch gekennzeichnet, dass** der akustische Kalibrierfaktor Kaf über eine Approximationsfunktion fc(delta_tc) aus der berechneten Zeitdifferenz (delta_tc) ermittelt wird.

6. Verfahren nach Anspruch 5 **dadurch gekennzeichnet, dass** die Approximationsfunktion fc(delta tc) aus einer Anzahl (N) von Wertepaaren (Kaf_i, delta_tc_i), die vor der Messung gewonnen werden, berechnet wird, indem an einer Anzahl (N) von Rohren (i), auf denen die Schallwandler in der für die Ultraschall-Clamp-on-Durchflusssessung üblichen Weise installiert sind, jeweils der akustische Kalibrierfaktor (Kaf_i) und die Zeitdifferenz (delta_tc_i) gemessen wird, wobei die Messung des akustischen Kalibrierfaktors (Kaf_i) jeweils erfolgt, indem die Laufzeiten (tx1) und (tx2) gemessen werden, während der Schallwandler (2) sich an einer Position (x1) oder einer Position (x2) befindet, welche Laufzeiten jeweils die Laufzeiten zwischen einem Wandlerelement (3) des ersten Schallwandlers (1) und einem Wandlerelement (4) des zweiten Schallwandlers (2) sind, wobei die Positionen (x1) und (x2) symmetrisch um eine Position (x0) liegen und der akustische Kalibrierfaktor Kaf_i zu Kaf_i = (x2 - x1) / (tx2- tx1) berechnet wird und die Messung der Zeitdifferenz (delta_tc_i) nach den Schritten a bis c nach Anspruch 1 erfolgt, während sich der Schallwandler (2) an der Position (x0) befindet.

7. Vorrichtung zur Umsetzung des Verfahrens zur Ultraschall-Clamp-on-Durchflussmessung nach einem Laufzeitverfahren mit zwei Schallwandlern mit Wandlerelementen, die auf einem Messrohr installiert sind, wobei die Vorrichtung aus einer Sendeeinheit , mindestens einem Array-Multiplexer mit mindestens zwei Eingängen, einem Richtungsumschalter, einem Empfangsverstärker, einer Auswerteeinheit und einer Steuereinheit und einer Berechnungseinheit besteht, **gekennzeichnet dadurch, dass**

entweder ein erstes Array-Element (4a) oder ein zweites Array-Element (4b) oder beide Array-Elemente (4a, 4b) über den Array-Multiplexer (AMUX) mit einem Kanal des Richtungsumschalters (DMUX) verbunden sind, und ein zweiter Kanal des Richtungsumschalters (DMUX) mit dem Wandlerelement (3) verbunden ist, und der Richtungsumschalter (DMUX) mit seinen beiden übrigen Anschlüssen jeweils mit der Sendeeinheit (S) und dem Empfangsverstärker (V) verbunden ist, und der Empfangsverstärker (V) mit der Auswerteeinheit (SPU), welche eine Zeitdifferenz (delta_tc) ermittelt,

indem eine Laufzeit (t1) zwischen einem Wandlerelement (3) des ersten Schallwandlers (1) und einem ersten Array-Element (4a) des zweiten Schallwandlers (2) gemessen wird und eine Laufzeit (t2) zwischen einem Wandlerelement (3) des ersten Schallwandlers (1) und einem zweiten Array-Element (4b) des zweiten Schallwandlers (2) gemessen wird und zwischen den Laufzeiten (t1) und (t2) die Zeitdifferenz (delta_tc) berechnet wird,

oder

indem in einer Analysephase eine Kreuzkorrelationsfunktion mindestens zweier Empfangssignale (s1) und (s2) berechnet wird, wobei das Empfangssignal (s1) das vom Wandlerelement (3) des ersten Schallwandlers (1) gesendete und vom ersten Array-Element (4a) des zweiten Schallwandlers (2) empfangene und digitalisierte Signal ist und das Empfangssignal (s2) das vom Wandlerelement (3) des ersten Schallwandlers (1) gesendete und vom zweiten Array-Element (4b) des zweiten Schallwandlers (2) empfangene und digitalisierte Signal ist, und die zeitliche Lage des Maximums der Kreuzkorrelationsfunktion ermittelt wird, wobei diese zeitliche Lage die Zeitdifferenz (delta_tc) ist,

und an die Berechnungseinheit (CALC) weitergibt, in welcher mit Hilfe der Zeitdifferenz (delta_tc) ein akustischer Kalibrierfaktor (Kaf) ermittelt wird, um den akustischen Einfluss des Messrohrs zu kompensieren,

verknüpft ist und die Steuereinheit (CTRL) sowohl den Richtungsumschalter (DMUX) als auch den Array-Multiplexer (AMUX) sowie den Empfangsverstärker (V) und die Auswerteeinheit (SPU) und die Berechnungseinheit (CALC) kontrolliert, um sowohl eine Analysephase als auch eine Betriebsphase mit denselben Komponenten zu realisieren, wobei während der Analysephase der Richtungsumschalter (DMUX) so geschaltet ist, dass die Sendeeinheit (S) mit den Anschlüssen des ersten Schallwandlers (1) und seinem zugehörigen Wandlerelement verbunden ist und der Empfangsverstärker (V) mit dem Array-Multiplexer (AMUX) verbunden ist, und der Array-Multiplexer (AMUX) so gesteuert wird, dass entweder nur das erste Array-Element (4a) oder das zweite Array-Element (4b) des zweiten Schallwandlers (2) mit dem Empfangsverstärker (V) verbunden ist, und während der Betriebsphase der Array-Multiplexer (AMUX) durch die Steuereinheit (CTRL) so geschaltet wird, dass die Array-Elemente (4a, 4b) parallel geschaltet sind.

8. Vorrichtung nach Anspruch 7 **dadurch gekennzeichnet, dass** die Auswerteeinheit (SPU) aus einem Anlog-Digital-Umsetzer (ADC), einem Pufferspeicher (MEM) und einem digitale Korrelator (KORR) besteht.

9. Vorrichtung nach Anspruch 7 **dadurch gekennzeichnet, dass** der Korrelator (KORR) durch einen programmierbaren Digitalen Signalprozessor realisiert wird.

10. Vorrichtung nach Anspruch 7 **dadurch gekennzeichnet, dass** die Auswerteeinheit (SPU) aus einer Zeitmessvorrichtung (TDC), einen Pufferspeicher (MEM) und einem Differenzbilder (MINUS) besteht.

11. Vorrichtung nach einem der Ansprüche 7 bis 10 **dadurch gekennzeichnet, dass** das Wandlerelement (3) aus mindestens zwei Array-Element en (3a) und (3b) besteht, wobei der Array-Multiplexer (AMUX2) entweder das Array-Element (3a) oder das Array-Element (3b) oder beide Array-Element e mit einem Kanal des Richtungsumschalters (DMUX) verbindet.

**Claims**

1. Method of ultrasonic clamp-on flow measurement based on a transit time principle using two sound transducers with transducer elements which are installed on a measuring pipe, wherein at least one transducer element consists of at least two array elements, **characterized in that**, during an analysis phase with the following steps:

a. measurement of a transit time (t1) between a transducer element (3) of the first sound transducer (1) and a first array element (4a) of the second sound transducer (2)

b. measurement of a transit time (t2) between a transducer element (3) of the first sound transducer (1) and a second array element (4b) of the second sound transducer (2)

c. calculation of a time difference (delta_tc) between the transit times (t1) and (t2)

an acoustic calibration factor (Kaf) is determined using the calculated time difference (delta_tc) and

this acoustic calibration factor (Kaf) is used during the subsequent operating phase for the measurement of a volumetric flow rate (Q) in order to compensate for the acoustic influence of the measuring pipe.

2. Method of ultrasonic clamp-on flow measurement based on a transit time principle using two sound transducers with transducer elements which are installed on a measuring pipe, wherein at least one transducer element consists of at least two array elements, **characterized in that**,

during an analysis phase, a cross-correlation function of at least two received signals (s1) and (s2) is calculated, wherein the received signal (s1) is the signal sent by the transducer element (3) of the first sound transducer (1) and received and digitized by the first array element (4a) of the second sound transducer (2), and the received signal (s2) is the signal sent by the transducer element (3) of the first sound transducer (1) and received and digitized by the second array element (4b) of the second sound transducer (2),

the temporal position of the maximum of the cross-correlation function is determined, wherein this temporal position is a time difference (delta_tc) and an acoustic calibration factor (Kaf) is determined using the calculated time difference (delta_tc) and

this acoustic calibration factor (Kaf) is used during the subsequent operating phase for the measurement of a volumetric flow rate (Q) in order to compensate for the acoustic influence of the measuring pipe.

3. Method according to claim 1 or 2, **characterized in that**

a path length difference (delta_lc) is calculated based on the time difference (delta_tc), wherein a known sound speed (ca) in the sound transducer is multiplied by the time difference (delta_tc),

resulting in an angle change (delta_alpha) of the angle of incidence (delta) with delta alpha = arcsin(delta_lc / delta_s), wherein (delta_s) is the mutual distance of the array elements (4a) and (4b), from which the calibration factor (Kaf) is calculated with Kaf = ca/sin(alpha + delta_alpha).

4. Method according to claim 1 or 2, **characterized in that**

the acoustic calibration factor (Kaf) is calculated on the basis of the time difference (delta_tc) according to the equation

$$Kaf = Ka / (1 + Ka * \cos(alpha) * delta\_tc / delta\_s),$$

wherein (Ka) is the ratio of the sound speed (ca) in the sound transducer and the sine of the angle of incidence (alpha) in the sound transducer, and (delta_s) is the distance between the array elements (4a) and (4b).

5. Method according to claim 1 or 2, **characterized in that**

the acoustic calibration factor (Kaf) is determined from the calculated time difference (delta_tc) using an approximation function fc(delta_tc).

6. Method according to claim 5, **characterized in that**

the approximation function fc(delta tc) is calculated from a number (N) of value pairs (Kaf_i, delta_tc_i) obtained before the measurement, wherein the acoustic calibration factor (Kaf_i) and the time difference (delta_tc_i) are measured on each of a number (N) of pipes (i), on which the sound transducers are installed in the manner customary to the ultrasonic clamp-on flow measurement, wherein the measurement of the acoustic calibration factor (Kaf_i) is carried out by measuring the transit times (tx1) and (tx2), while the sound transducer (2) is located at a position (x1) or (x2), respectively, said transit times being the transit times between a transducer element (3) of the first sound transducer (1) and a transducer element (4) of the second sound transducer (2), wherein the positions (x1) and (x2) lie symmetrically with respect to a position (x0), and the acoustic calibration factor (Kaf_i) is calculated as Kaf_i = (x2 - x1) / (tx2 - tx1), and the measurement of the time difference (delta_tc_i) is carried out according to steps (a) through (c) of claim 1, while the sound transducer (2) is located at the position (x0).

7. Device for the implementation of the method of ultrasonic clamp-on flow measurement based on a transit time principle using two sound transducers with transducer elements which are installed on a measuring pipe, wherein the device consists of an emitting unit, at least one array multiplexer with at least two inputs, a direction switch, a receiving amplifier, a signal processing unit, a control unit and a calculation unit, **characterized in that**

either the first array element (4a) or the second array element (4b) or both array elements (4a, 4b) are connected to a channel of the direction switch (DMUX) via the array multiplexer (AMUX), and a second channel of the direction switch (DMUX) is connected to the transducer element (3), and the direction switch (DMUX) with its two remaining terminals is connected to the emitting unit (S) and the receiving amplifier (V), and the receiving amplifier (V) is connected to the signal processing unit (SPU), which determines the time difference (delta_tc) by measuring the transit time (t1) between the transducer element (3) of the first sound transducer (1) and the first array element (4a) of the second sound transducer and by measuring the transit time (t2) between the transducer element (3) of the first sound transducer (1) and the second array element (4b) of the second sound transducer (2) and by calculating the time difference (delta_tc) between the transit times (t1) and (t2)

or

by calculating during an analysis phase a cross-correlation function of at least two received signals (s1) and (s2), wherein the received signal (s1) is the signal sent by the transducer element (3) of the first sound transducer (1) and received and digitized by the first array element (4a) of the second sound transducer (2), and the received signal (s2) is the signal sent by the transducer element (3) of the first sound transducer (1) and received and digitized by the second array element (4b) of the second sound transducer (2), and by determining the temporal position of the maximum of the cross-section function, wherein this temporal position is the time difference (delta_tc),

and transmits it to the calculation unit (CALC), which calculates an acoustic calibration factor (Kaf) using the time difference (delta_tc) in order to compensate for the acoustic influence of the measuring pipe,

and the control unit (CTRL) controls the direction switch (DMUX) and the array multiplexer (AMUX) as well as the receiving amplifier (V), the signal processing unit (SPU) and the calculation unit (CALC), in order to realize an analysis phase as well as an operational phase using the same components, wherein during the analysis phase the direction switch (DMUX) is switched in such a way that the emitting unit (S) is connected to the terminals of the first sound transducer (1) and its corresponding transducer element, and the receiving amplifier (V) is connected to the array multiplexer (AMUX), and the array multiplexer (AMUX) is controlled in such a way that either the first array element (4a) or the second array element (4b) of the second sound transducer (2) is connected to the receiving amplifier (V), and during the operational phase the array multiplexer (AMUX) is switched by the control unit (CTRL) in such a way that the array elements (4a, 4b) are connected in parallel.

8. Device according to claim 7, **characterized in that**
the signal processing unit (SPU) consists of an analog-to-digital converter (ADC), a buffer memory (MEM) and a digital correlator (KORR).

9. Device according to claim 7, **characterized in that**
the correlator (KORR) is realized by a programmable digital signal processor.

10. Device according to claim 7, **characterized in that**
the signal processing unit (SPU) consists of a time measuring unit (TDC), a buffer memory (MEM) and a difference generator (MINUS).

11. Device according to one of the claims 7 to 10, **characterized in that**
the transducer element (3) consists of at least two array elements (3a) and (3b), wherein the array multiplexer (AMUX2) connects either the array element (3a) or the array element (3b) or both array elements with a channel of the direction switch (DMUX).

**Revendications**

1. Méthode non intrusive de la mesure du débit par ultrasons selon le principe de différence de temps de transit avec deux transducteurs acoustiques avec des éléments transducteurs montés sur une conduite de mesure, au moins un élément transducteur comportant au moins deux éléments d'array, **caractérisé en ce que**
pendant une phase d'analyse comprenant les opérations suivantes :

a. mesure d'un temps de transit (t1) entre un élément transducteur (3) du premier transducteur acoustique (1) et un premier élément d'array (4a) du deuxième transducteur acoustique (2) ;
b. mesure d'un temps de transit (t2) entre un élément transducteur (3) du premier transducteur acoustique (1) et un deuxième élément d'array (4b) du deuxième transducteur acoustique (2) ;
c. calcul d'une différence de temps (delta_tc) entre les temps de transit (t1) et (t2) ;

un facteur de calibration acoustique (Kaf) est déterminé à l'aide de la différence de temps (delta_tc) calculée et ledit facteur de calibration acoustique (Kaf) est utilisé pendant la phase de fonctionnement subséquente pour la mesure d'un débit volumétrique (Q) pour compenser l'influence acoustique de la conduite de mesure.

2. Méthode non intrusive de la mesure du débit par ultrasons selon le principe de différence de temps de transit avec deux transducteurs acoustiques avec des éléments transducteurs montés sur une conduite de mesure, au moins un élément transducteur comportant au moins deux éléments d'array, **caractérisé en ce que** pendant une phase d'analyse une fonction de corrélation croisée d'au moins deux signaux de réception (s1) et (s2) est calculée, ledit signal de réception (s1) étant le signal qui est émis par l'élément transducteur (3) du premier transducteur acoustique (1) et reçu et numérisé par le premier élément d'array (4a) du deuxième transducteur acoustique (2), et ledit signal de réception (s2) étant le signal qui est émis par l'élément transducteur (3) du premier transducteur acoustique (1) et reçu et numérisé par le deuxième élément d'array (4b) du deuxième transducteur acoustique (2), la position temporelle du maximum de la fonction de corrélation croisée est déterminée, ladite position temporelle étant une différence de temps (delta_tc), et un facteur de calibration acoustique (Kaf) est déterminé à l'aide de la différence de temps (delta_tc) et ledit facteur de calibration acoustique (Kaf) est utilisé pendant la phase de fonctionnement subséquente pour la mesure d'un débit volumétrique (Q) pour compenser l'influence acoustique de la conduite de mesure.

3. Méthode selon la revendication 1 ou 2, **caractérisé en ce qu'** une différence de trajet (delta_lc) est calculée à partir de la différence de temps (delta_tc) en multipliant une célérité du son (ca) connue dans le transducteur acoustique par la différence de temps (delta_tc), dont résulte un changement angulaire (delta_alpha) d'un angle d'incidence (alpha) avec delta alpha = arcsin(delta_lc / delta_s), (delta_s) étant l'écart entre les éléments d'array (4a) et (4b), à partir duquel le facteur de calibration (Kaf) est calculé avec Kaf = ca/sin(alpha + delta_alpha).

4. Méthode selon la revendication 1 ou 2, **caractérisé en ce que** le facteur de calibration (Kaf) est calculé sur la base de la différence de temps (delta_tc) selon la formule Kaf = Ka / (1 + Ka * cos(alpha) * delta_tc / delta_s), (Ka) étant le rapport entre la célérité du son (ca) dans le transducteur acoustique et le sinus de l'angle d'incidence (alpha) dans le transducteur acoustique, et (delta_s) étant l'écart entre les éléments d'array (4a) et (4b).

5. Méthode selon la revendication 1 ou 2, **caractérisée en ce que** le facteur de calibration acoustique (Kaf) est déterminé à l'aide d'une fonction d'approximation fc(delta tc) à partir de la différence de temps (delta_tc) calculée.

6. Méthode selon la revendication 5, **caractérisé en ce que** la fonction d'approximation fc(delta tc) est calculée à partir d'un nombre (N) de paires de valeurs (Kaf_i, delta_tc_i) obtenues avant la mesure, en mesurant le facteur de calibration acoustique (Kaf_i) et la différence de temps (delta_tc_i) sur un nombre (N) de conduites (i) sur lesquelles les transducteurs acoustiques sont installés de manière habituelle pour la mesure du débit par ultrasons non intrusive, ledit facteur de calibration acoustique (Kaf_i) étant déterminé en mesurant respectivement les temps de transit (tx1) et (tx2) pendant que le transducteur acoustique (2) se trouve à la position (x1) ou (x2), lesdits temps de transit étant ceux entre un élément transducteur (3) du premier transducteur acoustique (1) et un élément transducteur (4) du deuxième transducteur acoustique (2), les positions (x1) et (x2) étant disposées symétriquement par rapport à une position (x0), et le facteur de calibration acoustique (Kaf_i) étant calculé selon la formule Kaf_i = (x2 - x1) / (tx2 - tx1), et la mesure de la différence de temps (delta_tc_i) étant effectuée selon les opérations (a) à (c) de la revendication 1, pendant que le transducteur acoustique (2) se trouve à la position (x0).

7. Dispositif pour la réalisation de la méthode non intrusive de la mesure du débit par ultrasons selon le principe de différence de temps de transit avec deux transducteurs acoustiques avec des éléments transducteurs montés sur une conduite de mesure, ledit dispositif comportant une unité d'émission, au moins un multiplexeur d'array avec au moins deux entrées, un commutateur de direction, un amplificateur de réception, une unité de traitement des signaux, une unité de commande et une unité de calcul, **caractérisé en ce que** le premier élément d'array (4a) ou le deuxième élément d'array (4b) ou tous les deux éléments d'array (4a, 4b) sont reliés à un canal du commutateur de direction (DMUX) via le multiplexeur d'array (AMUX), et un deuxième canal du commutateur de direction (DMUX) est relié avec l'élément transducteur (3), et les deux raccordements restants du commutateur de direction (DMUX) sont reliés avec l'unité d'émission (S) et avec l'amplificateur de réception (V), et l'amplificateur de réception (V) est relié avec l'unité de traitement des signaux (SPU) qui calcule la différence de temps (delta_tc)

en mesurant le temps de transit (t1) entre l'élément transducteur (3) du premier transducteur acoustique (1) et le premier élément d'array (4a) du deuxième transducteur acoustique (2) et en mesurant le temps de transit (t2) entre l'élément transducteur (3) du premier transducteur acoustique (1) et le deuxième élément d'array (4b) du deuxième transducteur acoustique (2) et en calculant la différence de temps (delta_tc) entre les temps de transit (t1) et (t2)

ou

en calculant pendant une phase d'analyse une fonction de corrélation croisée d'au moins deux signaux de réception (s1) et (s2), ledit signal de réception (s1) étant le signal qui est émis par l'élément transducteur (3) du premier transducteur acoustique (1) et reçu et numérisé par le premier élément d'array (4a) du deuxième transducteur acoustique (2), et ledit signal de réception (s2) étant le signal qui est émis par l'élément transducteur (3) du premier transducteur acoustique (1) et reçu et numérisé par le deuxième élément d'array (4b) du deuxième transducteur acoustique (2), et en déterminant la position temporelle du maximum de la fonction de corrélation croisée, ladite position temporelle étant la différence de temps (delta_tc),

et la transmet à l'unité de calcul (CALC) qui détermine un facteur de calibration acoustique (Kaf) à l'aide de la différence de temps (delta_tc) pour compenser l'influence acoustique de la conduite de mesure,

et l'unité de commande (CTRL) contrôle le commutateur de direction (DMUX) et le multiplexeur d'array (AMUX) ainsi que l'amplificateur de réception (V), l'unité de traitement des signaux (SPU) et l'unité de calcul (CALC) pour réaliser une phase d'analyse ainsi qu'une phase de fonctionnement en utilisant les mêmes composants, le commutateur de direction (DMUX) étant commuté dans la phase d'analyse de manière à ce que l'unité d'émission (S) soit reliée aux raccordements du premier transducteur acoustique (1) et à son élément transducteur correspondant et que l'amplificateur de réception (V) soit relié avec le multiplexeur d'array (AMUX) et que le multiplexeur d'array (AMUX) soit contrôlé de manière à ce que le premier élément d'array (4a) ou le deuxième élément d'array (4b) du deuxième transducteur acoustique (2) soit relié avec l'amplificateur de réception (V) et que le multiplexeur d'array (AMUX) soit commuté pendant la phase de fonctionnement par l'unité de commande (CTRL) de manière à ce que les éléments d'array (4a, 4b) soient connectés en parallèle.

8. Dispositif selon la revendication 7, **caractérisé en ce que**
l'unité de traitement des signaux (SPU) comporte un convertisseur analogique-numérique (ADC), une mémoire tampon (MEM) et un corrélateur numérique (KORR).

9. Dispositif selon la revendication 7, **caractérisé en ce que**
le corrélateur (KORR) est réalisé par un processeur de signaux numérique programmable.

10. Dispositif selon la revendication 7, **caractérisé en ce que**
l'unité de traitement des signaux (SPU) comporte un dispositif de mesure de temps (TDC), une mémoire tampon (MEM) et un générateur de différence (MINUS).

11. Dispositif selon l'une des revendications 7 à 10, **caractérisé en ce que**
l'élément transducteur (3) comporte au moins deux éléments d'array (3a) et (3b), le multiplexeur d'array (AMUX2) reliant l'élément d'array (3a) ou l'élément d'array (3b) ou tous les deux éléments d'array avec un canal du commutateur de direction (DMUX).

Fig. 1

Fig. 2

Fig. 3

Fig. 4

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 8808516 A1
- DE 19808642
- DE 10312034B3
- EP 0733885 A1
- DE 102009046871 A1
- DE 102004031274 B4
- DE 10221771 A1
- DE 102008029772 A1